# EUROPEAN PATENT SPECIFICATION

(11) **EP 3 592 076 B1**
(45) Date of publication and mention of the grant of the patent: **21.06.2023**
(21) Application number: 18774574.0
(22) Date of filing: 24.03.2018
(51) Int. Cl.: H04W 72/04, H04L 5/00

(54) **RADIO COMMUNICATION METHOD, DEVICE AND SYSTEM**
FUNKKOMMUNIKATIONSVERFAHREN, VORRICHTUNG UND SYSTEM
PROCÉDÉ, DISPOSITIF ET SYSTÈME DE COMMUNICATION RADIO

(30) Priority: 25.03.2017 CN 201710185151; 11.08.2017 CN 201710687476
(43) Date of publication of application: 08.01.2020
(73) Proprietor: Huawei Technologies Co., Ltd., Longgang District Shenzhen, Guangdong 518129 (CN)
(72) Inventor: LIU, Zhe, Shenzhen Guangdong 518129 (CN); YANG, Chaobin, Shenzhen Guangdong 518129 (CN); WANG, Yong, Shenzhen Guangdong 518129 (CN); GAO, Quanzhong, Shenzhen Guangdong 518129 (CN); MAZZARESE, David jean-marie, Shenzhen Guangdong 518129 (CN); ZHOU, Guohua, Shenzhen Guangdong 518129 (CN); TANG, Hao, Shenzhen Guangdong 518129 (CN); CHEN, Wei, Shenzhen Guangdong 518129 (CN); ZHANG, Liwen, Shenzhen Guangdong 518129 (CN)
(74) Representative: Körber, Martin Hans
(86) International application number: PCT/CN2018/080400
(87) International publication number: WO 2018/177228

(56) References cited:
- EP-A1- 3 528 582
- WO-A1-2012/027887
- CN-A- 102 083 229
- US-A1- 2011 249 641
- US-A1- 2012 008 575
- US-A1- 2012 063 302
- HUAWEI ET AL: "Discussion on the PRACH for SUL", 3GPP DRAFT; R1-1715716, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nagoya, Japan; 20170918 - 20170921 11 September 2017 (2017-09-11), XP051329161, Retrieved from the Internet: URL:http://www.3gpp.org/ftp/tsg_ran/WG1_RL 1/TSGR1_AH/NR_AH_1709/Docs/ [retrieved on 2017-09-11]
- HUAWEI ET AL: "Remaining issues on the PRACH for SUL", 3GPP DRAFT; R1-1717901, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 2 October 2017 (2017-10-02), XP051352310, Retrieved from the Internet: URL:http://www.3gpp.org/ftp/tsg_ran/WG1_RL 1/TSGR1_90b/Docs/ [retrieved on 2017-10-02]

## Description

### TECHNICAL FIELD

This application relates to the field of communications technologies, and specifically, to a wireless communication method, an apparatus, and a system.

### BACKGROUND

In a wireless communications system, a terminal and a network transmit data to each other based on a radio (radio) communications technology. However, before data transmission, the terminal usually needs to first access the network to set up a connection (connection) to the network.

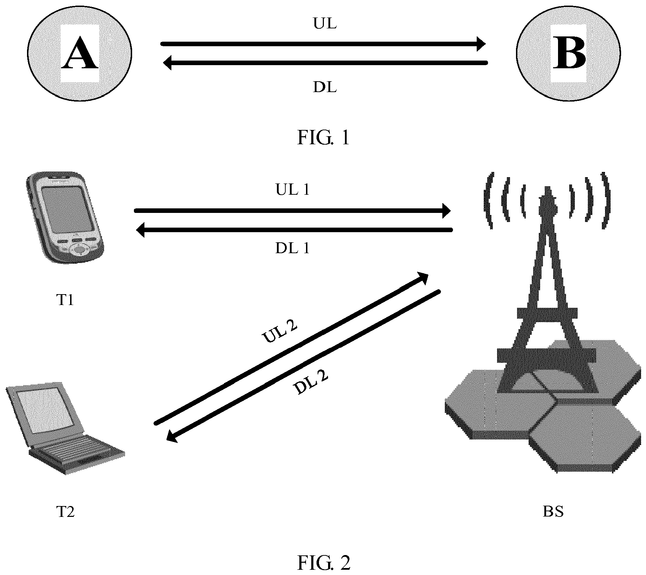

Without loss of generality, the connection between the terminal and the network may be simply denoted as a link (link) shown in FIG. 1. Two endpoints of a link are respectively used to represent two devices that are respectively configured to receive and send data. In FIG. 1, an endpoint A represents a device that uses a network service, such as a terminal. An endpoint B represents a device that provides the network service, such as a base station. A connection line between the two endpoints is used to represent a data transmission path. Based on a data transmission direction, the link is further divided into an uplink (uplink, UL) and a downlink (downlink, DL). The uplink is a link from the terminal to the network, and the downlink is a link from the network to the terminal. In FIG. 1, an arrow line from the endpoint A to the endpoint B shows an uplink, and an arrow line from the endpoint B to the endpoint A shows a downlink. Data transmission needs to occupy a communications resource. The connection line that represents the data transmission path in FIG. 1 may also represent a communications resource occupied by data transmission on the path.

In the field of radio communications technologies, the communications resource mainly refers to a frequency resource. If simultaneous transmission of data in the uplink and the downlink is allowed in a wireless communications system, but the uplink and the downlink need to occupy different frequency ranges for mutual differentiation, the system is referred to as a frequency division duplex (frequency division duplex, FDD) system. If the uplink and the downlink are allowed to occupy a same frequency range in the wireless communications system, but the uplink and the downlink need to occupy different transmission moments for mutual differentiation, the system is referred to as a time division duplex (time division duplex, TDD) system.

To transmit data to each other, the uplink and the downlink between the terminal and the network are indispensable. In addition, to ensure validity and reliability of data transmission, the uplink and the downlink need to cooperate with each other. Data retransmission is used as an example. The terminal receives data in a downlink, and if the terminal detects that data transmission fails, the terminal needs to feed back, in an uplink cooperating with the downlink, that a transmission status of the data is a failure, to trigger the base station to retransmit the data. Correspondingly, after sending the data in the downlink, the base station also needs to monitor feedback of the terminal in the uplink cooperating with the downlink. Such cooperation between the uplink and the downlink is usually long-term and fixed, and is also referred to as being paired (paired) or coupled (coupled). In this case, the connection between the terminal and the network may be understood as an uplink and a downlink that are paired with each other.

Initial access (initial access) in a long term evolution (Long Term Evolution, LTE) system of the 4th generation (the 4th generation, 4G) mobile communication is used as an example. After being powered on, an LTE terminal performs cell search (cell search), camps on an appropriate cell, receives a system message, and accesses an LTE network. Specifically, the LTE terminal first receives, on a downlink frequency of the LTE system, a synchronization signal that is broadcast in a cell, to identify the cell and determine timing (timing) and frequency synchronization required for wireless communication. Next, the LTE terminal receives and decodes a system message that is broadcast in the cell, to know a system parameter required for accessing the network. Then, the LTE terminal initiates a random access (random access) procedure on an uplink frequency of the LTE system, and sets up a connection (connection) to the cell of the network. The downlink frequency on which the synchronization signal is received and the uplink frequency on which the random access is initiated are frequency resources occupied by an uplink and a downlink that are paired with each other in the LTE system.

To use the frequency resource properly and efficiently, the International Telecommunication Union (International Telecommunication Union, ITU) formulates radio regulations (Radio Regulations). The regulations have strict requirements on allocation (allocation) of radio frequency bands (frequency band), and assignment (assignment) and use of frequency channels (frequency channel). Therefore, a commercial wireless communications system is usually allowed to work only in a radio frequency range meeting the ITU regulations. A mobile communications system is used as an example. A frequency range authorized to be used by the mobile communications system is referred to as a licensed spectrum of the mobile communications system. Different mobile communications systems often have different licensed spectrums.

Currently, an operating band (operating band) of 4G LTE is stipulated in technical specifications of the third generation partnership project (Third Generation Partnership Project, 3GPP). Technical specifications of the 5th generation (the 5th generation, 5G) mobile communications system are under study and formulation. Compared with 4G, a 5G transmission solution and a 5G operating band need to be re-designed. Therefore, a 5G radio technology is referred to as 5G new radio (new radio, NR) in a 3GPP study project, and is sometimes referred to as a 5G new air interface (air interface). For example, an operating band 1 of 4G LTE includes an uplink operating band 1920 MHz to 1980 MHz and a downlink operating band 2110 MHz to 2170 MHz that are paired with each other. In 5G NR, to meet requirements for a higher peak rate and a larger system capacity, an operating band that is far higher than that of 4G LTE is expected to be used. At a current stage, a candidate licensed spectrum of 5G NR includes a high-frequency band from 24.25 GHz to 86 GHz. The high-frequency band is also referred to as a millimeter-wave band.

However, signal attenuation on the high-frequency band is relatively serious. If 5G NR supports only an operation on the high-frequency band, network coverage may be a problem. In addition, considering scarcity of the frequency resource, 5G NR should also support an operation on a licensed spectrum in 4G LTE. In other words, 5G NR and 4G LTE share the licensed spectrum of 4G LTE. This is referred to as NR-LTE co-existence (NR-LTE Co-existence) in the 3GPP study project. That the 5G NR uses the licensed spectrum of 4G LTE not only enhances a coverage capability of a 5G network, but also improves resource utilization of the 4G licensed spectrum. In addition, some operators may have only the 4G licensed spectrum, and NR-LTE co-existence is significant for early commercial use of the 5G network. However, NR-LTE co-existence is now still a study framework, and a specific technical solution still needs more deep exploration and study.

D1 WO2012/027887A1 discloses e-NB configures one or more UL CCs via dedicated signaling includes RACH configuration (S301, paragraph [0049]). The e-NB may aggregate one or more RAR with respect to UL CCs into one MAC RAR PDU(paragraph [0051]).

D2 US2012/0008575A1 discloses UE receives PRACH configuration on a downlink CC and transmits a preamble to the eNB on the selected PRACH resource(paragraph [0093]). The eNB sends a random access response to acknowledge the successfully detected preambles.(paragraph [0049])

D3 US2012/063302A1 discloses UE is configured with uplink CCs and linked downlink CCs and used the selected RACH to transmit random access preamble.(paragraphs [0093]-[0096])

### SUMMARY

With reference to a plurality of implementations, the present invention provides a wireless communication method, an apparatus, and a system, to resolve one or more defects in the prior art. Particularly, use of technical solutions provided in the following aspects helps to set up a connection between a terminal and a base station. In addition, with reference to some optional technical solutions, a better technical effect can further be achieved. The subject matter of the invention is defined by the appended claims. Further aspects are described in the following for supporting the understanding of the invention. In the following, parts of the description and drawings referring to embodiments not covered by the invention are not presented as embodiments of the invention, but as examples useful for understanding the invention.

In this application, a carrier is used to represent a frequency range that meets a system stipulation. The frequency range may be determined by using a center frequency (denoted as a carrier frequency) of the carrier and bandwidth of the carrier. A value set of the center frequency and a value set of the bandwidth of the carrier are both predefined by the system. Unless otherwise specified, a plurality of carriers are a plurality of different carriers, in other words, frequency ranges are different. A radio resource managed by the base station may be denoted as one or more downlink carriers, and one or more uplink carriers.

It should be understood that a concept of the carrier may correspond to a serving cell, and is not only applicable to a carrier aggregation (carrier aggregation, CA) scenario, but also to a non-CA scenario. In the CA scenario, the carrier may be a primary component carrier (component carrier, CC), or may be a secondary CC. A serving cell in the CA scenario may be a primary cell (primary cell, PCell) or a secondary cell (secondary cell, SCell). The downlink carrier may be understood as a resource used for downlink transmission, which may be referred to as a downlink resource for short. The downlink carrier includes a carrier used for downlink transmission in a frequency division duplex (frequency division duplex, FDD) mode or resources used for downlink transmission in carriers in a time division duplex (time division duplex, TDD) mode. The uplink carrier may be understood as a resource used for uplink transmission, which may be referred to as an uplink resource for short. The uplink carrier includes a carrier used for uplink transmission in the frequency division duplex mode or resources used for uplink transmission in the carriers in the time division duplex mode.

### BRIEF DESCRIPTION OF DRAWINGS

FIG. 1 is a schematic diagram of links in a wireless communications system;
FIG. 2 is a schematic structural diagram of a wireless communications system according to an embodiment of the present invention;
FIG. 3 is a schematic flowchart of a wireless communication method according to an embodiment of the present invention;
FIG. 4 is a schematic structural diagram of a wireless communications apparatus according to an embodiment of the present invention;
FIG. 5 is a schematic structural diagram of another wireless communications apparatus according to an embodiment of the present invention;
FIG. 6 is a schematic structural diagram of a base station according to an embodiment of the present invention;
FIG. 7 is a schematic structural diagram of a terminal according to an embodiment of the present invention; and
FIG. 8 is a schematic diagram of a time unit pattern of an uplink carrier according to an embodiment of the present invention.

It should be understood that, in the foregoing schematic structural diagrams, sizes and forms of modules are for reference only, and should not constitute a unique interpretation of embodiments of the present invention. A relative position between the modules shown in the schematic structural diagrams only schematically represents a structural association between the modules, rather than limiting a physical connection manner of the embodiments of the present invention. In addition, it is neither possible nor necessary for the schematic structural diagram to present all possible modules. Therefore, if a module is not presented in the figure, it should not be interpreted as that the module cannot be included in the embodiments of the present invention.

### DESCRIPTION OF EMBODIMENTS

To make objectives, technical solutions, and advantages of the present invention clearer, the following further describes the technical solutions provided by the present invention in detail with reference to the accompanying drawings and embodiments.

In a wireless communications system, a communications device may include a device that provides a network service and a device that uses the network service. Devices that provide network services are devices that form a network, and the device may be referred to as network equipment (network equipment) or a network element (network element) for short. The network equipment usually pertains to a network owner, including a telecommunications operator (such as China Mobile and Vodafone), a telecommunications infrastructure leasing company (such as a tower company), and the like. The devices that use the network services are devices that can access the network but do not belong to the network. These devices usually belong to a user, and provide the network services for the user. The device may be referred to as user equipment (user equipment, UE), or a subscriber unit (subscriber unit, SU). For the user, the user equipment is a device that directly provides a network service, and the network equipment is a device that indirectly provides the network service.

A mobile communications system is used as an example, and a typical example of the user equipment is a mobile phone (mobile phone). After accessing a mobile communications network, the mobile phone can use a mobile communications service provided by the network. The mobile communications network may include a radio access network (radio access network, RAN) and a core network (core network, CN). Correspondingly, the network equipment also includes a RAN device and a CN device. The RAN device is responsible for a wireless-related function, for example, an evolved NodeB (evolutional NodeB, eNB or eNodeB) in an LTE system. The CN device is responsible for overall functions of the network, and may include a user plane (user plane, UP) device and a control plane (control plane) device, for example, a serving gateway (serving gateway, SGW) and a mobility management entity (mobility management entity, MME) in the LTE system.

For ease of description, the following describes, by using a base station and a terminal as an example, in detail a wireless communication method, a device, and a system that are provided in this application. The base station refers to network equipment in a wireless communications system, and in particular, to a RAN device, including another RAN device introduced in future RAN evolution. For a specific form, the base station may be a macro base station (macro base station), or may be a micro base station (micro base station). The micro base station is sometimes referred to as a small cell (small cell).

The terminal refers to user equipment in the wireless communications system. For example, the terminal may be a mobile phone or a cellular phone (cellular phone), a tablet computer (tablet computer), a laptop computer (laptop computer), or another device that supports a wireless communication function, for example, an internet of things device, including a wearable device, a smart home device (a smart meter, a smart appliance, or the like), an intelligent vehicle, and the like.

It should be understood that the technical solutions provided in this application do not limit a type of the wireless communications system. A mobile communications system is used as an example. The technical solutions provided in this application is applicable to various evolved systems of the LTE system, for example, a 4.5G mobile communications system called in the industry, or a 5G mobile communications system described in the background.

FIG. 2 is a schematic structural diagram of a wireless communications system according to an embodiment of the present invention. The wireless communications system includes at least one base station. FIG. 2 shows one base station, which is denoted as BS. The wireless communications system further includes at least one terminal. FIG. 2 shows two terminals, which are respectively denoted as T1 and T2. An uplink and a downlink between T1 and BS are respectively denoted as UL 1 and DL 1. An uplink and a downlink between T2 and BS are respectively denoted as UL 2 and DL 2. For brevity, FIG. 2 shows only one base station and two terminals. The wireless communications system may alternatively include another quantity of base stations and another quantity of terminals, and network equipment other than the base station.

In the wireless communications system, both the terminal and the base station support a radio access technology (radio access technology, RAT) of the system, and know various configurations predefined by the system. The configurations predefined by the system are pre-stored in memories of the terminal and the base station, or are embodied in hardware or software structures of the terminal and the base station.

The base station provides communication coverage for a specific geographic region by using an integrated or external antenna device, and a terminal located within the coverage of the base station can communicate with the base station. An LTE system is used as an example, and one base station may manage one or more cells. Each cell has an identification (identification), and the identification is also referred to as a cell identity (cell identity, cell ID). Unless otherwise specified, a plurality of cells are a plurality of different cells. From the perspective of a radio resource, a cell is a combination of a downlink radio resource and an uplink radio resource (optional) that is paired with the downlink radio resource.

In this application, a radio resource managed by the base station is described based on a carrier (carrier) rather than based on a cell. The carrier is used to represent a frequency range that meets a system stipulation. The frequency range may be determined by using a center frequency (denoted as a carrier frequency) of the carrier and bandwidth of the carrier. For a meaning of the carrier, refer to a concept of a component carrier (component carrier, CC) in LTE. Value sets of the center frequency and the bandwidth of the carrier are both predefined by the system. Unless otherwise specified, a plurality of carriers are a plurality of different carriers, in other words, frequency ranges are different. Therefore, the radio resource managed by the base station may be denoted as one or more downlink carriers, and one or more uplink carriers.

After being powered on, the terminal may camp on a cell and receive a system message in a downlink synchronization process. "Camping" refers to a status in which the terminal can receive a system message after the terminal implements downlink synchronization with the base station. In this application, in a scenario in which the base station manages a plurality of downlink carriers, "camping" may also be understood as a status in which the terminal can receive a system message on a downlink carrier after the terminal implements downlink synchronization with the downlink carrier of the base station. After camping on a cell or camping on a downlink carrier, the terminal may initiate a radio access procedure to set up a connection to a mobile communications system if there is a service requirement.

In the LTE system, a pairing relationship between a downlink resource and an uplink carrier that constitute a cell is specified by the system. In addition, if the uplink carrier is paired with the downlink carrier, the uplink carrier is paired with the downlink carrier in a one to one correspondence. Different from that in the prior art, in the wireless communications system in this embodiment of the present invention, one uplink carrier managed by the base station can be paired with a plurality of downlink carriers. This is denoted as a first type of scenario. In addition, one downlink carrier managed by the base station can also be paired with a plurality of uplink carriers. This is denoted as a second type of scenario. Therefore, in the wireless communications system in this embodiment of the present invention, the uplink carrier and the downlink carrier may be considered as decoupled.

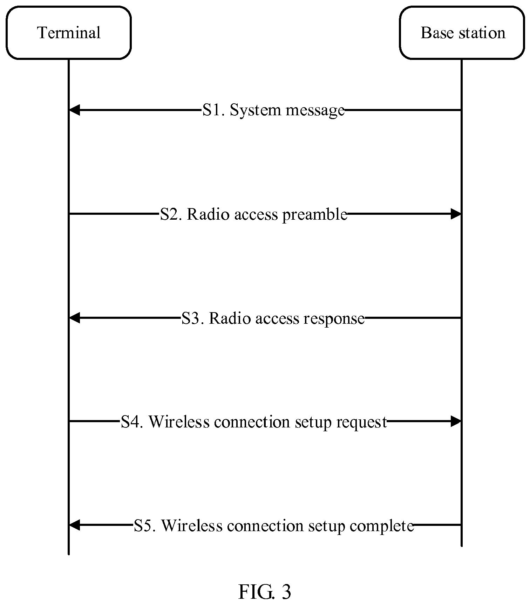

Based on the wireless communications system shown in FIG. 2, the following describes a wireless communication method according to an embodiment of the present invention with reference to FIG. 3.

In the wireless communication method, interaction between a terminal and a base station is still used as an example to describe the technical solutions in the embodiments of the present invention. Particularly, a radio access procedure initiated by the terminal is described on the premise that an uplink carrier and a downlink carrier can be decoupled. FIG. 3 is a schematic flowchart of a wireless communication method according to an embodiment of the present invention. In FIG. 3, a direction of a horizontal line between the base station and the terminal represents a transmission direction, and text on the horizontal line represents a name of information or a message transmitted in a step. It should be understood that the names of the information or messages are merely examples, and are not intended to limit the scope of the embodiments of the present invention.

As shown in FIG. 3, the wireless communication method includes the following five steps.

Step S1: A base station sends a system message, and a terminal detects and receives the system message.

The system information includes system configuration information required by the terminal to initiate a radio access procedure. The system configuration information includes uplink carrier configuration information and preamble transmission configuration information. The uplink carrier configuration information is used to indicate one or more uplink carriers, and the preamble transmission configuration information is used to indicate a transmission configuration of a radio access preamble.

A set of all possible radio access preambles, namely, a whole set of the radio access preambles, belongs to a configuration predefined by a system. To avoid mutual interference between radio access preambles, code division multiplexing is usually applied to the radio access preambles predefined by the system, in other words, two different radio access preambles are orthogonal to each other. In this way, even if two different radio access preambles are transmitted on a same time-frequency resource, the base station may detect the two different radio access preambles.

After receiving the system message, the terminal knows the system configuration information required for initiating radio access. For example, after parsing out the uplink carrier configuration information from the system message, the terminal knows an uplink carrier on which the radio access may be initiated. After parsing out the transmission configuration information of the radio access preamble from the system message, the terminal knows how to send the radio access preamble on the uplink carrier. Subsequently, when the terminal intends to set up a connection to a network, the terminal may initiate a radio access procedure. For details, refer to the following step S2.

Step S2: The terminal sends a radio access preamble, and the base station detects and receives the radio access preamble.

When the terminal initiates the radio access procedure, the terminal needs to send the radio access preamble on the uplink carrier. That the terminal sends the radio access preamble may be considered as a radio access attempt. Correspondingly, the base station detects whether the radio access preamble exists on the uplink carrier. Similar to an LTE system, a detection manner may be related detection. If no radio access preamble is detected, the terminal may not send the radio access preamble, or the radio access preamble fails to be transmitted. If the radio access preamble is detected, it may be determined that the terminal initiates the radio access procedure. Subsequently, the base station responds to the detected radio access preamble. For details, refer to the following step S3.

Step S3: The base station sends a radio access response message, and the terminal detects and receives the radio reception response message.

After detecting the radio access preamble on the uplink carrier, the base station sends the radio access response message. The radio access response message includes configuration information required by the terminal for continuing a subsequent radio access procedure. For example, the radio access response message includes a resource for sending a wireless connection setup request message in step S4. Different from that in the prior art, in this embodiment of the present invention, because the terminal may initiate radio access procedures on a plurality of uplink carriers, the base station needs to indicate an uplink carrier for the subsequent radio access procedure to the terminal. Particularly, the base station sets the radio access response message based on identification information of the to-be-indicated uplink carrier, and sends the radio access response message on a downlink carrier.

Correspondingly, after sending the radio access preamble, the terminal also detects the radio access response message on the downlink carrier. For the terminal, the terminal may determine a result of the current radio access attempt by detecting the radio access response message. In addition, because the terminal may send radio access preambles on a plurality of uplink carriers, the terminal may also determine, by detecting the radio access response message, an uplink carrier indicated by the network.

For example, if the terminal does not detect the radio access response message within a period of time, it is determined that the current radio access attempt fails. Subsequently, the terminal may stop the subsequent radio access procedure. The terminal sends the radio access preamble after a period of time. That the terminal sends the radio access preamble again may be considered as another radio access attempt step.

If the terminal detects and receives the radio access response message on the downlink carrier, and determines that the current radio access attempt does not fail, the terminal may continue the subsequent radio access procedure. For details, refer to step S4. Conversely, if the terminal determines that the current radio access attempt fails, there is no need to perform step S4. In other words, step S4 and even a subsequent step are not necessarily performed, and therefore are optional steps.

S4: The terminal sends a wireless connection setup request message, and the base station detects and receives the wireless connection setup request message.

The wireless connection setup request message is used to request to set up a wireless connection to the network. The wireless connection setup request message may further be used to indicate a downlink carrier on which the terminal camps. For example, the terminal may scramble content in the wireless connection setup request message by using identification information of the downlink carrier on which the terminal camps. Alternatively, the terminal directly adds, to the wireless connection setup request message, the identification information of the downlink carrier on which the terminal camps.

If the base station detects and receives the wireless connection setup request of the terminal, and agrees that the terminal sets up the wireless connection to the network, the base station sends a wireless connection setup complete message to the terminal, to be specific, performs step S5. The wireless connection setup complete message is used to indicate configuration information of the wireless connection between the terminal and the network. If the terminal does not agree that the terminal sets up the wireless connection to the network, the wireless connection setup complete message may not be sent. Alternatively, the base station may send another message, and the message is used to indicate that the wireless connection between the terminal and the network fails to be set up. Therefore, step S5 is also an optional step.

S5: The base station sends the wireless connection setup complete message, and the terminal detects and receives the wireless connection setup complete message.

If the terminal detects and receives the wireless connection setup complete message, it may be determined that the wireless connection between the terminal and the network is successfully set up. After the wireless connection is successfully set up, the terminal may determine that the downlink carrier on which the system message is received (namely, the downlink carrier on which the radio access response message is detected and received) is paired with the uplink carrier indicated by the network (namely, the uplink carrier on which the wireless connection setup request is sent), where the downlink carrier and the uplink carrier are respectively a downlink primary component carrier or an uplink primary component carrier. Subsequently, the terminal and the base station may transmit service data to each other based on the two carriers.

According to the wireless communication method shown in FIG. 3, at least the following technical effects may be obtained: The base station sets the radio access response message based on the identification information of the uplink carrier, and the terminal detects the radio access response message. From the perspective of the system, the terminal determines the result of the current wireless access attempt based on the radio access response message, so that the terminal can terminate a subsequent procedure in a timely manner when determining that the wireless access attempt fails. In addition, when determining, based on the radio access response message, the uplink carrier indicated by the network, the terminal is enabled to obtain the uplink carrier confirmed by the network, thereby improving reliability of the subsequent radio access procedure. Therefore, the wireless communication method shown in FIG. 3 helps set up a connection between the terminal and the base station.

It should be noted that, in step S1, that the base station sends the system message is not limited to sending the system message on only one downlink carrier, and the base station may also send a plurality of system messages on a plurality of downlink carriers.

In a wireless network, a downlink resource of one cell usually includes only one downlink carrier. If a system message and a cell are in a one-to-one correspondence, different cells usually have different system messages. If one downlink carrier represents one cell, the system messages on the plurality of downlink carriers represent system messages of a plurality of cells. For a carrier aggregation scenario, the plurality of downlink carriers may be further classified into a downlink primary component carrier (representing a primary cell) and a downlink secondary component carrier (representing a secondary cell). Certainly, in this embodiment of the present invention, a downlink resource of one cell may also include a plurality of downlink carriers.

In this embodiment of the present invention, if content included in system messages sent on different downlink carriers is not exactly the same, it is considered that the system messages are different. If content of two system messages is exactly the same, even if the two messages are sent on different downlink carriers, the two system messages may also be considered as a same system message. For example, a downlink carrier of one cell includes a plurality of downlink carriers.

From the perspective of the terminal, the terminal usually camps on a cell, and implements frequency synchronization and time synchronization with a downlink carrier of the cell by receiving a synchronization signal that is broadcast in the cell. Then, the terminal detects whether a system message exists on the downlink carrier of the cell. If yes, the terminal receives the system message. Therefore, even if the base station sends a plurality of system messages on a plurality of downlink carriers, the terminal may receive the system message only on the downlink carrier on which the terminal camps. However, different terminals may receive different system messages on different downlink carriers.

Next, in this application, some optional implementations of this embodiment of the present invention are described in detail for two types of scenarios in which an uplink carrier and a downlink carrier are decoupled.

A first type of scenario: One uplink carrier is paired with a plurality of downlink carriers.

The base station sends a plurality of system messages on a plurality of downlink carriers. The plurality of system messages indicate at least one same uplink carrier.

In this case, terminals camping on different downlink carriers may initiate radio access procedures on a same uplink carrier, and are respectively paired with the plurality of downlink carriers. Therefore, for the system, one uplink carrier can be paired with a plurality of downlink carriers. Before sending the system messages, the base station knows and determines possible combinations in which the uplink carrier is paired with the plurality of downlink carriers. However, the base station may still fail to distinguish, by using only a detected radio access preamble, that a terminal camping on which downlink carrier sends the radio access preamble. Therefore, to respond to the terminal, the base station may need to send a radio access response message on all downlink carriers that may be paired with the uplink carrier on which the radio access preamble is detected. Obviously, this requires relatively large system overheads.

For the first type of scenario, in an optional implementation of the present invention, transmission configurations, of radio access preambles, that are indicated by the plurality of different system messages sent by the base station are different from each other. Based on this, the base station may determine, based on a transmission configuration of a detected radio access preamble, a system message that indicates the transmission configuration, and then send a radio access response message only on a downlink carrier on which the system message is sent, thereby reducing the system overheads.

That transmission configurations, of radio access preambles, that are indicated by the plurality of different system messages sent by the base station are different from each other includes one or more of the following cases:
time domain resources that are occupied by the radio access preambles and that are indicated by the plurality of system messages are different from each other;
frequency domain resources that are occupied by the radio access preambles and that are indicated by the plurality of system messages are different from each other; and
radio access preamble sets to which the radio access preambles belong and that are indicated by the plurality of system messages are different from each other.

In the following, a plurality of optional technical solutions of the embodiments of the present invention are described in detail with reference to FIG. 2 and embodiments.

Referring to FIG. 2, it is assumed that the base station BS sends two different system messages respectively on DL 1 and DL 2. The system message on DL 1 indicates an uplink carrier, for example, UL 1. The system message on DL 2 indicates two uplink carriers, for example, UL 1 and UL 2. The terminal T1 camping on DL 1 and the terminal T2 camping on DL 2 respectively receive the system message on DL 1 and the system message on DL 2.

If the foregoing optional implementation is not used, the base station cannot determine whether a radio access preamble is sent by T1 or T2 when the base station detects the radio access preamble on UL 1. If the foregoing optional implementation is used, transmission configurations of radio access preambles sent by T1 and T2 are different. Therefore, after detecting a radio access preamble, the base station may identify, based on a transmission configuration of the radio access preamble, a downlink carrier on which a terminal sending the radio access preamble camps, and then send a radio access response message only on the identified downlink carrier.

### Embodiment 1

The time domain resources that are occupied by the radio access preambles and that are indicated by the plurality of system messages are different from each other.

For example, a time domain resource that is occupied by a radio access preamble and that is indicated by the system message on DL 1 is a subframe (subframe) 1 or a subframe 3, and a time domain resource that is occupied by a radio access preamble and that is indicated by the system message on DL 2 is a subframe 2 and a subframe 4. If the base station detects the radio access preamble in subframe 1 or subframe 3 of UL 1, the base station only needs to send the radio access response message on DL 1. If the base station detects the radio access preamble in subframe 2 or subframe 4 of UL 1, the base station only needs to send the radio access response message on DL 2.

### Embodiment 2

The frequency domain resources that are occupied by the radio access preambles and that are indicated by the plurality of system messages are different from each other.

For example, a frequency domain resource that is occupied by a radio access preamble and that is indicated by the system message on DL 1 is resource blocks 1 to 6 (resource block, RB), and a frequency domain resource that is occupied by a radio access preamble and that is indicated by the system message on DL 2 is RBs 11 to 16. If the base station detects the radio access preamble on the RBs 1 to 6 of UL 1, the base station only needs to send the radio access response message on DL 1. If the base station detects the radio access preamble on the RBs 11 to 16 of UL 1, the base station only needs to send the radio access response message on DL 2.

### Embodiment 3

The radio access preamble sets to which the radio access preambles belong and that are indicated by the plurality of system messages are different from each other.

For example, a radio access preamble set to which a radio access preamble belongs and that is indicated by the system message on DL 1 is a set 1, and a radio access preamble set to which a radio access preamble belongs and that is indicated by the system message on DL 2 is a set 2. If the radio access preamble detected by the base station on UL 1 belongs to the set 1, the base station only needs to send the radio access response message on DL 1. If the radio access preamble detected by the base station on UL 1 belongs to the set 2, the base station only needs to send the radio access response message on DL 2.

### Embodiment 4

A plurality of cases in Embodiments 1 to 3 exist in this embodiment. A downlink carrier on which a terminal that sends a radio access preamble camps may be identified with reference to any one of the foregoing embodiments, and then a radio access response message is sent only on the identified downlink carrier.

For example, a time domain resource that is occupied by a radio access preamble and that is indicated by the system message on DL 1 is a subframe (subframe) 1 or a subframe 3, and an occupied frequency domain resource is resource blocks (resource block, RB) 1 to 6. A time domain resource that is occupied by a radio access preamble and that is indicated by the system message on DL 2 is a subframe 2 and a subframe 4, and an occupied frequency domain resource is RBs 11 to 16. If the base station detects the radio access preamble in the subframe 1 or the subframe 3 of UL 1, or detects the radio access preamble on the RBs 1 to 6 of UL 1, the base station only needs to send the radio access response message on DL 1. If the base station detects the radio access preamble in the subframe 2 or the subframe 4 of UL 1, or detects the radio access preamble on the RBs 11 to 16 of UL 1, the base station only needs to send the radio access response message on DL 2.

The second type of scenario: One downlink carrier is paired with a plurality of uplink carriers.

A system message sent on a downlink carrier indicates a plurality of uplink carriers. After receiving the system message, a terminal knows that the terminal may send a radio access preamble on these uplink carriers. Therefore, for the system, the plurality of uplink carriers are candidate uplink carriers, and the downlink carrier can be paired with the plurality of uplink carriers. In addition, this may be determined not only before the base station sends the system message, but also after the terminal receives the system message.

For the system, although the downlink carrier can be paired with the plurality of uplink carriers, it is still meaningful to find a most appropriate uplink carrier in these uplink carriers to be paired with the downlink carrier. For example, the most appropriate uplink carrier is configured as an uplink primary component carrier, and more important information may be transmitted on the uplink primary component carrier. Optionally, one or more of other carriers in the uplink carriers may be configured as uplink secondary component carriers. A rule for determining whether the uplink carrier is appropriate is not limited. There may be a plurality of possibilities for the rule, for example, high uplink transmission reliability, a strong uplink coverage capability, or low uplink load.

Based on an objective of finding the most appropriate uplink carrier, the wireless communication method in this embodiment of the present invention further includes the following two implementations:

First is an example for understanding, wherein the base station selects the most appropriate uplink carrier.

The terminal sends the same radio access preamble on the plurality of candidate uplink carriers indicated by the system message. The base station detects the radio access preamble on the plurality of candidate uplink carriers indicated by the system message, and determines an uplink carrier in the plurality of uplink carriers on which the same radio access preamble is detected. The uplink carrier selected by the base station is the most appropriate uplink carrier found by the base station. Other carriers on which the same radio access preamble is sent may be blindly configured by the base station as uplink secondary component carriers of the terminal. Because more information is controlled by the base station, the uplink carrier determined in this optional manner may be closer to that in a real case. In this case, the base station needs to indicate the determined uplink carrier to the terminal, so that the terminal can determine the uplink carrier indicated by the network.

Second is an implementation of the embodiment, wherein the terminal selects the most appropriate uplink carrier.

The terminal selects an uplink carrier from the plurality of candidate uplink carriers indicated by the system message, and sends the radio access preamble on the uplink carrier. The uplink carrier selected by the terminal is the most appropriate uplink carrier found by the terminal. Because the radio access preamble needs to be sent only on one uplink carrier, system overheads may be reduced in this optional manner.

In this manner, the base station sends, by using the system message on the downlink carrier, a selection rule for the terminal to select the uplink carrier.

There may be a plurality of selection rules for the terminal to perform selection in the plurality of candidate uplink carriers, and the base station indicates the selection rule in the system message. For example, when a measurement value of a downlink carrier on which the terminal camps is greater than a threshold, where the measurement value may be a measurement value obtained based on a cell reference signal of the downlink carrier, a synchronization signal of the downlink carrier, or a link state reference signal of the downlink carrier, the terminal selects to send a radio preamble on a high frequency carrier. If the measurement value is less than the threshold, the terminal sends the radio preamble on a low frequency carrier. The threshold of the measurement value is carried in the system message.

For the base station, because two terminals may send a same radio access preamble on two candidate uplink carriers, the base station may still need to determine an uplink carrier in the two candidate uplink carriers on which the same radio access preamble is detected. Therefore, it is necessary to indicate the uplink carrier to the terminal. In addition, even if the radio access preamble detected by the base station relates to only one candidate uplink carrier, because a detection error exists, that the base station indicates the uplink carrier to the terminal is also beneficial, and still helps the terminal identify the uplink carrier indicated by the network.

It can be learned from analysis of the two implementations that, it is of great significance for the base station to indicate the uplink carrier to the terminal. Therefore, in this embodiment of the present invention, the base station may further set a radio access response message based on identification information of the uplink carrier, and send the radio access response message on the downlink carrier, to indicate the uplink carrier to the terminal. That the base station sets a radio access response message based on identification information of the to-be-indicated uplink carrier includes a plurality of the following possible technical solutions.

### Example 5 for understanding

The base station adds the identification information of the to-be-indicated uplink carrier to the radio access response message. If the radio access response message is detected by the terminal, the uplink carrier identified based on the identification information is determined as the uplink carrier indicated by the network.

For the first implementation of the example, the base station determines the most appropriate uplink carrier.

If the uplink carrier identified based on the identification information belongs to the candidate uplink carriers indicated by the system message, the terminal may determine that the radio access response message is valid. Then, the terminal may send a wireless connection setup request message on the uplink carrier indicated by the network. If the uplink carrier identified based on the identification information does not belong to the candidate uplink carriers indicated by the system message, the terminal may determine that the radio access response message is invalid. Then, the terminal may terminate the subsequent access procedure.

For the second implementation of the example, the terminal determines the most appropriate uplink carrier, and there may be two solutions for the terminal.

In a first solution, if the uplink carrier identified based on the identification information is the uplink carrier selected by the terminal, the terminal may determine that the radio access response message is valid. Then, the terminal may send a wireless connection setup request message on the uplink carrier indicated by the network. If the uplink carrier identified based on the identification information is not the uplink carrier selected by the terminal, the terminal may determine that the radio access response message is invalid. Then, the terminal may terminate the subsequent access procedure.

In a second solution, if the uplink carrier identified based on the identification information is the uplink carrier selected by the terminal, the terminal may determine that the radio access response message is valid. Then, the terminal may send a wireless connection setup request message on the uplink carrier indicated by the network. If the uplink carrier identified based on the identification information is not the uplink carrier selected by the terminal, and does not belong to the candidate uplink carriers indicated by the system message either, the terminal may determine that the radio access response message is invalid. Then, the terminal may terminate the subsequent access procedure. If the uplink carrier identified based on the identification information is not the uplink carrier selected by the terminal, but belongs to the candidate uplink carriers indicated by the system message, the terminal may determine that the radio access response message is valid. Then, the terminal may send a wireless connection setup request message on the uplink carrier indicated by the network. In this case, it is considered that the network changes the uplink carrier selected by the terminal.

### Example 6 for understanding

The base station adds the identification information of the to-be-indicated uplink carrier to control information of the radio access response message. The control information is used to indicate a transmission configuration of the radio access response message. If the control information of the radio access response message is detected, the uplink carrier identified based on the identification information is determined as the uplink carrier indicated by the network.

For the first implementation of the example, the base station determines the most appropriate uplink carrier.

If the uplink carrier identified based on the identification information belongs to the candidate uplink carriers indicated by the system message, the terminal may determine that the radio access response message indicated by the control information is valid. The terminal may continue to receive the radio access response message. Then, the terminal may send a wireless connection setup request message on the uplink carrier indicated by the network. If the uplink carrier identified based on the identification information does not belong to the candidate uplink carriers indicated by the system message, the terminal may determine that the radio access response message indicated by the control information is invalid. Then, the terminal may terminate the subsequent access procedure, and the terminal does not need to receive the radio access response message indicated by the control information.

For the second implementation of the example, the terminal determines the most appropriate uplink carrier, and there may be two solutions for the terminal.

In a first solution, if the uplink carrier identified based on the identification information is the uplink carrier selected by the terminal, the terminal may determine that the radio access response message indicated by the control information is valid. The terminal may continue to receive the radio access response message. Then, the terminal may send a wireless connection setup request message on the uplink carrier indicated by the network. If the uplink carrier identified based on the identification information is not the uplink carrier selected by the terminal, the terminal may determine that the radio access response message indicated by the control information is invalid. Then, the terminal may terminate the subsequent access procedure.

In a second solution, if the uplink carrier identified based on the identification information is the uplink carrier selected by the terminal, the terminal may determine that the radio access response message indicated by the control information is valid. The terminal may continue to receive the radio access response message. Then, the terminal may send a wireless connection setup request message on the uplink carrier indicated by the network. If the uplink carrier identified based on the identification information is not the uplink carrier selected by the terminal, and does not belong to the candidate uplink carriers indicated by the system message either, the terminal may determine that the radio access response message indicated by the control information is invalid. Then, the terminal may terminate the subsequent access procedure. If the uplink carrier identified based on the identification information is not the uplink carrier selected by the terminal, but belongs to the candidate uplink carriers indicated by the system message, the terminal may determine that the radio access response message indicated by the control information is valid. The terminal may continue to receive the radio access response message. Then, the terminal may send a wireless connection setup request message on the uplink carrier indicated by the network. In this case, it is considered that the network changes the uplink carrier selected by the terminal.

### Embodiment 7

The base station preprocesses control information of the radio access response message by using the identification information of the determined uplink carrier. The control information is used to indicate a transmission configuration of the radio access response message. The preprocessing is also a configuration predefined by the system. Both the terminal and the base station know the preprocessing operation. For example, the preprocessing is scrambling, and an operation corresponding to the terminal is descrambling.

If the control information is detected by the terminal based on identification information of an uplink carrier, the uplink carrier is determined as the uplink carrier indicated by the network. The terminal may determine that the radio access response message indicated by the control information is valid. The terminal may continue to receive the radio access response message. Then, the terminal may send a wireless connection setup request message on the uplink carrier indicated by the network. The wireless connection setup request message is used to request to set up a wireless connection to the network.

If the control information of the radio access response message cannot be detected after the terminal performs attempts on identification information of all the uplink carriers, it is determined that the current radio access attempt fails.

Scrambling is used as an example. In LTE, a formula for calculating a scrambling sequence RA-RNTI for scrambling control information of a random access response is RA-RNTI=1+t_{id}+10^{∗}f_{id}. Herein, t_{id} is a number of a first subframe in which a preamble is sent, and an f_{id} subframe is an index of frequency domain in which the preamble is sent. For an FDD carrier, f_{id}=0. For a TDD carrier, f_{id} is less than 6.

In this embodiment of the present invention, because a plurality of terminals camping on a same downlink carrier may send a same preamble sequence on two different uplink carrier subsets. In order that the terminal can determine a terminal to which the radio access response is sent, calculation of a scrambling sequence RCS for scrambling the control information of the radio access response message may be related to an identifier of the to-be-indicated uplink carrier. For example, RCS=1+t_{id}+10^{∗}f_{id}+UL ID. Herein, UL ID indicates the identifier of the to-be-indicated uplink carrier.

When both the foregoing two scenarios are supported in a wireless communications system, any one of Embodiments 1 to 4 and any one of Embodiments 5 to 7 may be combined into a new embodiment, and at least 12 possible combinations are included. For example, Embodiment 1 and Embodiment 5 may be combined into a new embodiment, Embodiment 1 and Embodiment 7 may also be combined into a new embodiment, and Embodiment 4 and Embodiment 5 may also be combined into a new embodiment.

### Embodiment 8

For the second type of scenario in which the uplink carrier and the downlink carrier are decoupled, in other words, when one downlink carrier is paired with a plurality of uplink carriers, a system message sent by the base station on a downlink carrier may be used to indicate a plurality of uplink carriers.

It should be understood that the system information in this specification may be an improvement of an LTE-based system message, or may be a system message defined in an NR system. For example, a name of the system message may be a system information block (system information block, SIB), for example, a SIB2, or may be remaining minimum system information (remaining minimum system information, RMSI), or the like.

In an optional implementation, one system message is used to carry a plurality of configuration information elements about an uplink carrier, and a quantity of configuration information elements of the uplink carrier that are carried in the system message is indicated by using another information element. Each configuration information element about an uplink carrier is used to indicate configuration information of the uplink carrier.

The following is a schematic information element structure of system information:

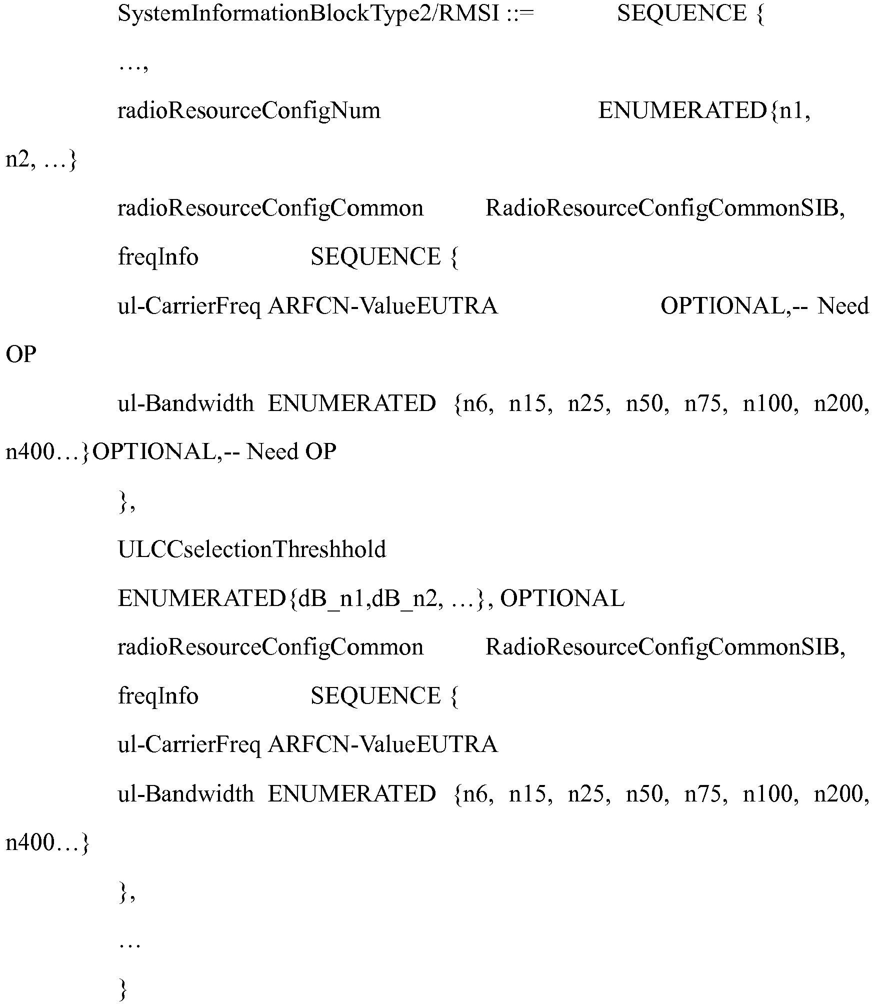

In the schematic information element structure, SystemInformationBlockType2 (briefly denoted as a SIB2) or RMSI is a name of a system message. The SIB2/RMSI includes: a radioResourceConfigNum information element used to indicate a quantity of radio resource configurations, a radioResourceConfigCommon information element used to indicate a radio resource configuration, a freqInfo information element used to indicate frequency information, and another information element not shown (represented by a three-dot ellipsis ...).

A value of the radioResourceConfigNum information element is used to indicate the quantity of radio resource configurations included in the system message. The value of the radioResourceConfigNum information element may be of an enumerated (enumerated) type, and different values correspond to different quantities. Actual values of n1 and n2 may be agreed on in advance. For example, the value of n1 is 1, and the value of n2 is 2. When the value of the radioResourceConfigNum information element is 1, it indicates that the system message includes one radio resource configuration. When the value of the radioResourceConfigNum information element is 2, it indicates that the system message includes two radio resource configurations. In the foregoing schematic information element structure of the system information, a quantity of radioResourceConfigCommon information elements is the quantity of radio resource configurations included in the system message.

In another optional implementation, a system message is used to carry a configuration information element of one uplink carrier, and whether there is another system message that is on the downlink carrier and that is also used to indicate configuration information of another uplink carrier is indicated by using another information element.

The following is another schematic information element structure of the system information:

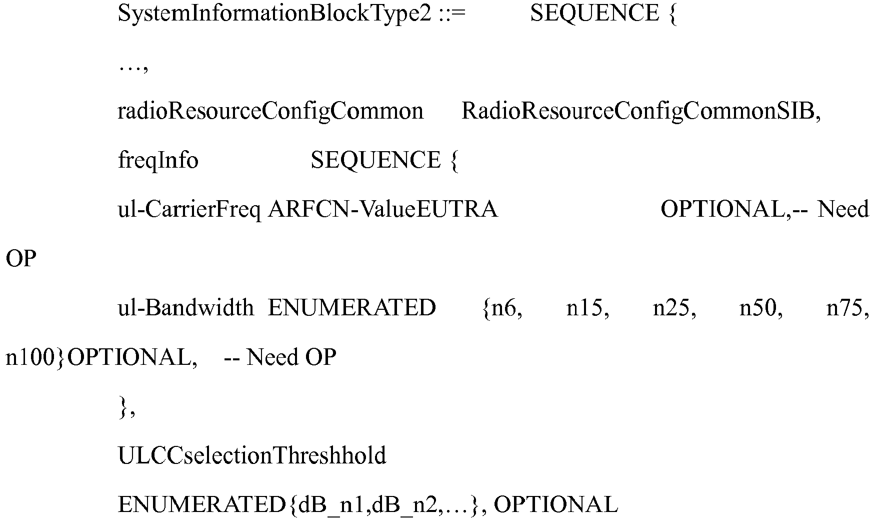

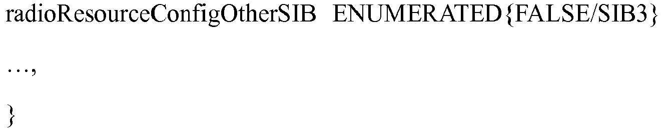

In the schematic information element structure, the SIB2/RMSI includes a radioResourceConfigOtherSIB information element used to indicate another SIB radio resource configuration, a radioResourceConfigCommon information element used to indicate a radio resource configuration, a freqInfo information element used to indicate frequency information, and another information element not shown (represented by a three-dot ellipsis ...).

The radioResourceConfigOtherSIB information element is used to indicate whether there is another system message carrying information about a radio resource configuration. A value of the information element may be of an enumerated (enumerated) type, and different enumerated types may represent different meanings. For example, a schematic enumerated type FALSE indicates that there is no other SIB radio resource configuration information, and an enumerated type SIB3 indicates that other radio resource configuration information is indicated in a SIB3. It should be understood that the SIB3 is only an example, and other radio resource configuration information may also be carried in another system message. Different system messages may correspond to different enumerated types. The enumerated types may further include a SIB4, a SIB5, or an enumerated type corresponding to another system message.

In an optional implementation, the radioResourceConfigCommon information element that is used to indicate a radio resource configuration and that is in the foregoing two schematic information element structures of the system message may have the following schematic information element structure:

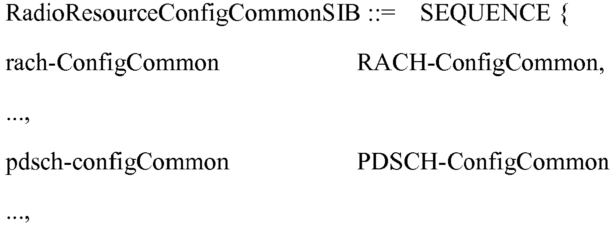

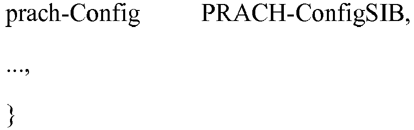

The radioResourceConfigCommon information element includes a random access channel rach common configuration rach-ConfigCommon information element, a physical downlink shared channel pdsch common configuration pdsch-configCommon information element, and a physical random access channel prach configuration prach-Config information element. The rach-ConfigCommon information element may include at least information such as time domain resource information (indicating a slot in which a preamble can be sent in a system frame), frequency domain resource information (indicating a frequency domain resource, of an uplink resource, on which a preamble can be sent), and preamble format information (including at least a sequence length, a subcarrier spacing size, and a time domain length of a preamble). The prach-Config information element may include at least rach root sequence information.

The pdsch-configCommon information element indicates configuration information of a downlink carrier. When a system message includes a plurality of radioResourceConfigCommon information elements, only one of the radioResourceConfigCommon information elements needs to include the pdsch-configCommon information element. For example, as shown in the following schematic information element structure, for another radioResourceConfigCommon information element, the pdsch-configCommon information element is optional.

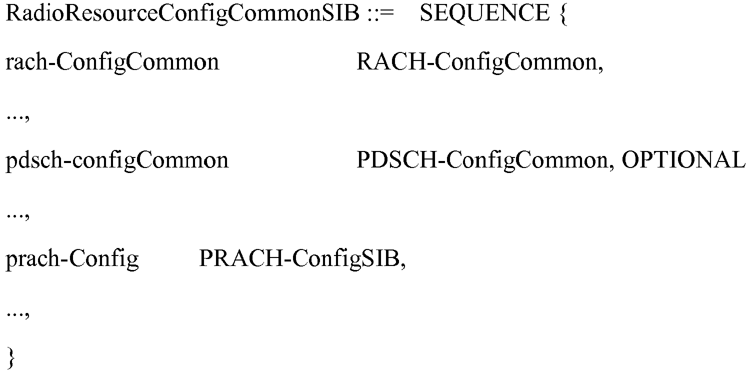

In an optional implementation, in the foregoing two schematic information element structures of the system message, the freqInfo information element may include an uplink carrier frequency channel number field ul-CarrierFreq and an uplink carrier bandwidth field ul-Bandwidth. The uplink carrier frequency channel number field indicates frequency channel number information of an uplink carrier, and the uplink carrier bandwidth field is an indication of an enumerated type. One enumerated type value corresponds to one bandwidth value. For example, n6 indicates bandwidth of six PRBs, ..., and n400 indicates bandwidth of 400 PRBs.

In an optional implementation, in the foregoing two schematic information element structures of the system message, an uplink carrier selection threshold ULCCselectionThreshold information element is optional.

It should be understood that when a system message does not include the ULCCselectionThreshold information element, the terminal may send preambles on a plurality of sets of uplink carriers that are broadcast in the system message. This may correspond to the first case of the second type of scenario, to be specific, the base station selects the most appropriate uplink carrier.

When a system message includes the uplink carrier selection threshold configuration information element, this may correspond to the second case of the second type of scenario, to be specific, the terminal selects the most appropriate uplink carrier. An example in which a measurement value of a downlink carrier is RSRP is used below, and the terminal determines, based on an RSRP measurement result of a downlink carrier on which the system message is received, an uplink carrier on which random access is initiated.

If the RSRP measurement result is greater than or equal to a threshold, a preamble is sent on an uplink resource indicated in first radio resource configuration information that is broadcast in the SIB2/RMSI. If the RSRP measurement result is less than the threshold, the preamble is sent on an uplink resource indicated in non-first radio resource configuration information that is broadcast in the SIB2/RMSI or an uplink resource in radio resource configuration information indicated in another SIB message block.

### Embodiment 9

For the wireless communication method shown in FIG. 3, in step S5, the base station sends the wireless connection setup complete message, and the terminal detects and receives the wireless connection setup complete message.

In an optional implementation, the wireless connection setup complete message may include a dedicated (dedicated) preamble and uplink carrier resource information, to be specific, the base station triggers, by using the wireless connection setup complete message, the terminal to initiate a contention-free random access on a specified uplink carrier, to perform a reconfiguration process of the uplink carrier. It should be understood that the wireless connection setup complete message may correspond to a message 4 (Msg4 for short) in a random access procedure, for example, a radio resource control (radio resource control, RRC) connection setup message or an RRC connection re-establishment message.

The following is another schematic information element structure of the RRC connection setup message:

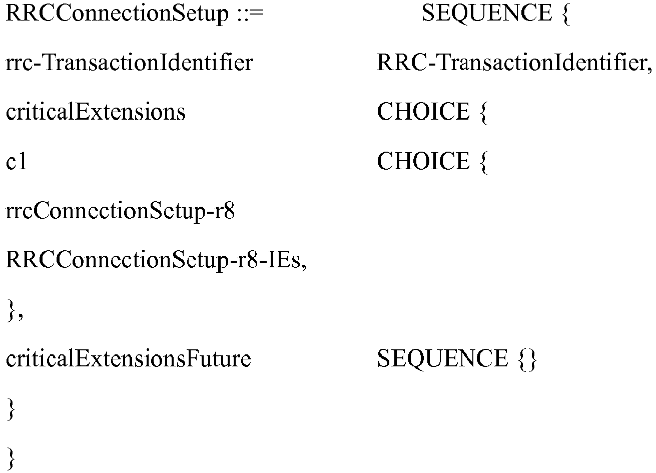

RRCConnectionSetup is a name of the RRC connection setup message, and the dedicated preamble and the uplink carrier resource information may be carried in an RRCConnectionSetup-r8-IEs information element. Specifically, the following is a schematic information element structure of the RRC ConnectionS etup-r8- IEs information element:

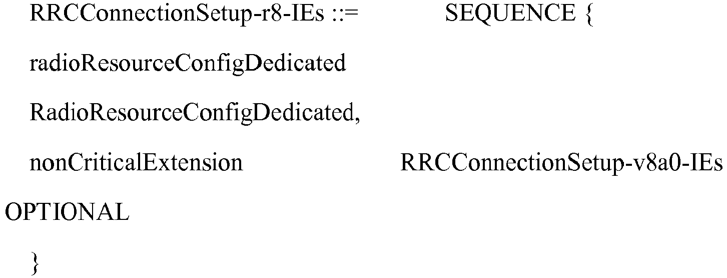

The dedicated preamble and the uplink carrier resource information may be carried in a radioResourceConfigDedicated information element in the schematic structure of the RRCConnectionSetup-r8-IEs information element.

Specifically, the following is a schematic information element structure of the radioResourceConfigDedicated information element:

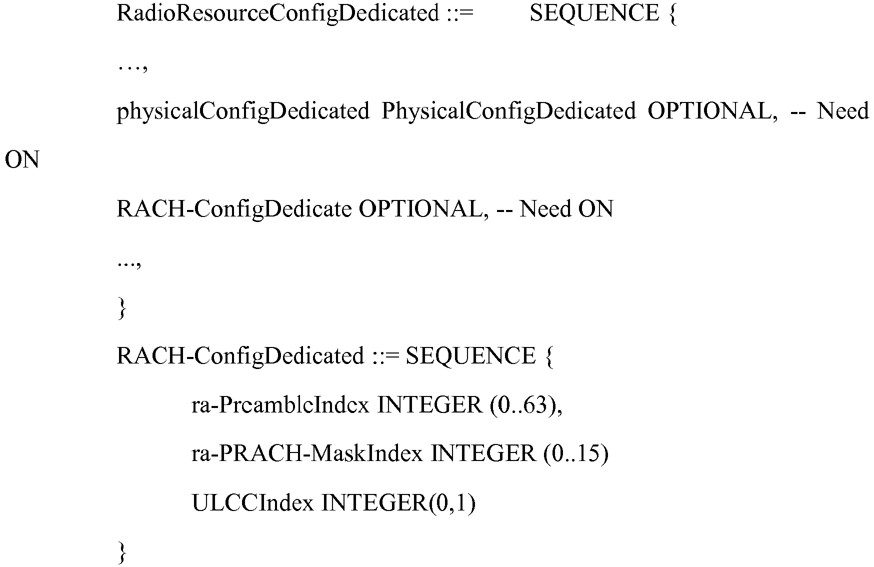

A RACH dedicated configuration RACH-ConfigDedicate information element includes information required by UE to initiate a contention-free random access on a specified uplink resource by using a specified preamble format.

For example, a ra-PreambleIndex field in the RACH-ConfigDedicate information element is used to indicate information about a specified dedicated preamble, and a ra-PRACH-MaskIndex field in the RACH-ConfigDedicate information element is used to indicate a specific RACH resource, of a radio frame, on which the specified dedicated preamble is sent, and an ULCCIndex field in the RACH-ConfigDedicate information element is used to indicate that the terminal initiates the random access on a specified RACH resource of a specified uplink resource by using the specified dedicated preamble.

For the ULCCIndex field, if a value indicated by the ULCCIndex field is equal to 0, it indicates that the contention-free random access is initiated on an uplink resource 0, for example, the uplink resource in the first radio resource that is broadcast in the SIB2/RMSI in Embodiment 8. If the ULCCIndex is equal to 1, it indicates that the UE initiates the contention-free random access on an uplink resource 1, for example, an uplink resource in a non-first (for example, second) radio resource that is broadcast in the SIB2/RMSI or a SIB indicated by a SIB/RMSI in Embodiment 8. It should be understood that a quantity of bits of the ULCCindex field is not specifically limited, for example, may be related to a value N of a maximum quantity of radio resources that can be broadcast by the SIB/RMSI. For example, the quantity of bits of the field is roundup log₂N. It should be understood that a name of the ULCCIndex field is merely an example, and a length of the ULCCIndex field may not be limited to one bit, and may alternatively be two bits, three bits, or more bits.

### Embodiment 10

Based on the wireless communication method shown in FIG. 3, a wireless connection may be set up between the terminal and the base station. The wireless connection may correspond to an RRC connection in an LTE system or an NR system, or a wireless connection in the NR system. Then, when the wireless connection between the terminal and the base station is set up, the terminal and the base station may transmit data to each other. Transmission of the data includes transmission of a service data channel, and also includes transmission of a control channel.

For the second type of scenario in which the uplink carrier and the downlink carrier are decoupled, in other words, when one downlink carrier is paired with a plurality of uplink carriers, a system message sent by the base station on a downlink carrier may be used to indicate a plurality of uplink carriers. For example, for the system message, refer to the manner in Embodiment 8. Details are not described again in this embodiment.

Two uplink carriers are used as an example. It is assumed that a system message on a downlink carrier indicates two uplink carriers. After the wireless connection between the terminal and the base station is set up, the terminal and the base station may transmit data to each other based on one or two of the two uplink carriers.

When there are more than two uplink carriers, for example, three or more uplink carriers, reference can be made to a case in which there are two uplink carriers. After the wireless connection between the terminal and the base station is set up, the terminal and the base station transmit data to each other on one or some or all of the plurality of uplink carriers.

In an optional implementation, the base station sends time unit configuration information to the terminal, and the terminal receives the time unit configuration information from the base station. The time unit configuration information is used to indicate a time unit pattern of one or more uplink carriers. The time unit pattern is used to determine an uplink carrier used for data transmission with the base station. Each time unit pattern represents some or all time units in an uplink carrier. A set of these time units may be understood as the time unit pattern. It should be understood that the time unit configuration information may be carried in an RRC message, downlink control information, a media access control (media access control, MAC) control element (control element, CE), or cell-level broadcast signaling. The time unit may be a subframe (subframe), a slot (slot), or a symbol (symbol).

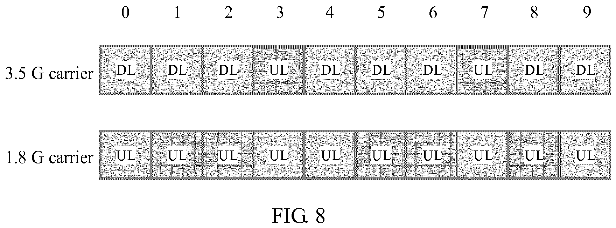

FIG. 8 is a schematic diagram of a time unit pattern of an uplink carrier according to an embodiment of the present invention. FIG. 8 shows ten time units that are numbered from 0 to 9 in sequence. A 3.5 GHz carrier (referred to as a 3.5 G carrier for short) is configured to work in a TDD mode, time units 3 and 7 are used for uplink transmission, and other time units are used for downlink transmission. Therefore, the 3.5 G carrier may be considered to include both a 3.5 G uplink carrier (corresponding to the time units 3 and 7) and a 3.5 G downlink carrier (corresponding to the other time units). A 1.8 GHz carrier (referred to as a 1.8 G carrier for short) is configured to work in an FDD mode, ten time resources can all be used for uplink transmission, and the 1.8 G carrier may be considered as a 1.8 G uplink carrier.

In FIG. 8, a time unit pattern of the 3.5 G uplink carrier includes the time units 3 and 7. In this case, the time units represented by the time unit pattern of the 3.5 G uplink carrier are all time units of the 3.5 G uplink carrier. A time unit pattern of the 1.8 G uplink carrier includes time units 1, 2, 5, 6, and 8. In this case, the time units represented by the time unit pattern of the 1.8 G uplink carrier are some time units of the 1.8 G uplink carrier.

After the terminal knows, by using the uplink resource configuration information, the time unit pattern of at least one uplink carrier in the time unit patterns of the two uplink carriers shown in FIG. 8, it may be considered that both uplink carriers may be used for uplink transmission. In this case, the two uplink carriers may be understood as uplink primary component carriers of the terminal.

For example, if the terminal receives scheduling information of uplink data transmission (for example, a PUSCH), and a time unit scheduled by using the scheduling information is the time unit 1, in this case, if the terminal knows, based on the time unit pattern of the 1.8 G uplink carrier, that uplink data should be sent on the time unit 1 of the 1.8 G uplink carrier, or if the terminal knows, based on the time unit pattern of the 3.5 G uplink carrier, that the uplink data should not be sent on the 3.5 G uplink carrier, the uplink data should be sent on the time unit 1 of the 1.8 G uplink carrier. Similarly, if the terminal is to perform uplink control channel (for example, a PUCCH) transmission in the time unit 3, the terminal may also know that the uplink control channel transmission should be performed in the time unit 3 of the 3.5 G uplink carrier.

Therefore, based on the optional implementation, the terminal and the base station can determine, based on a time unit pattern of an uplink carrier, an uplink carrier used for data transmission.

It should be understood that, based on the optional implementation, in a possible design, the time unit configuration information may explicitly indicate the time unit pattern of the uplink carrier. For example, the time unit configuration information is used to directly indicate a set of time units included in the time unit pattern of the uplink carrier. Certainly, the time unit pattern of the uplink carrier may alternatively be predefined by a protocol, and different time unit patterns correspond to different indexes. The time unit configuration information indicates an index of the time unit pattern, in other words, may indicate the time unit pattern of the uplink carrier.

In another possible design, the time unit configuration information may implicitly indicate the time unit pattern of the uplink carrier. For example, the time unit configuration information is used to indicate a set of time units that do not belong to the time unit pattern in the uplink carrier, thereby indirectly indicating the time unit pattern of the uplink carrier. FIG. 8 is used as an example. The base station indicates, by using semi-static (for example, a system message or an RRC message) or dynamic signaling (for example, DCI), that time units 0, 3, 4, 7, and 9 of the 1.8 G uplink carrier do not belong to the time unit pattern of the 1.8 G uplink carrier, for example, the time units 0, 3, 4, 7, and 9 are used as a reserved resource or used for downlink transmission, so that the terminal indirectly knows that the time unit pattern of the 1.8 G uplink carrier is the remaining time units (time units 1, 2, 5, 6, and 8). Specifically, the base station may indicate, by using the 3.5 G downlink carrier, the time units that do not belong to the time unit pattern in the 1.8 G uplink carrier. Similarly, the base station may alternatively indicate, by using the 3.5 G downlink carrier, time units that do not belong to the time unit pattern in the 3.5 G uplink carrier.

It should be understood that the base station may further indicate one or more time unit patterns of one or more uplink carriers by using one or more pieces of time unit configuration information. For example, one uplink carrier has a plurality of time unit patterns, and the terminal selects one time unit pattern by default or selects one time unit pattern based on signaling of the base station.

In addition, if the terminal is configured to work in an NR-LTE dual connectivity (dual connectivity, DC) mode, assuming that the 1.8 G carrier is used for LTE connection, and a combination of the 3.5 G carrier and the 1.8 G carrier is used for NR connection, the time unit patterns of the 3.5 G uplink carrier and the 1.8 G uplink carrier for NR may be sent to the terminal by using an NR base station, or may be sent to the terminal by using an LTE base station. In the latter case, the NR base station may need to first send time unit configuration information of the time unit patterns of the 3.5 G uplink carrier and the 1.8 G uplink carrier for NR to the LTE base station, and then the LTE base station sends the time unit configuration information to the terminal.

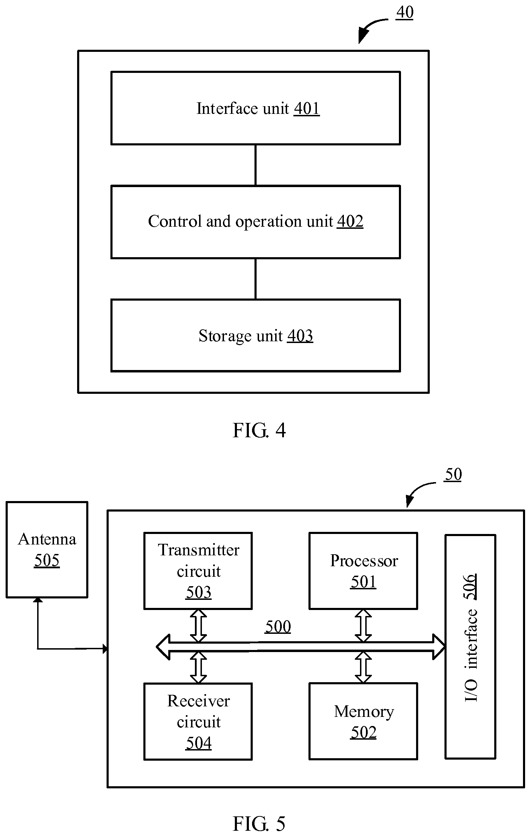

FIG. 4 is a schematic structural diagram of a wireless communications apparatus according to an embodiment of the present invention. The wireless communications apparatus may be a processor. As shown in the figure, the wireless communications apparatus 40 includes an interface unit 401, a control and operation unit 402, and a storage unit 403. The storage unit stores program code, and the program code may be classified into two types, which are respectively used to implement a function of the terminal and a function of the base station in the wireless communication method in the embodiments of the present invention. The two types of program code are denoted as program code for implementing the function of the terminal and program code for implementing the function of the base station. When the program code for implementing the function of the terminal is decoded and executed by the control and operation unit, the function of the terminal in the wireless communication method in the embodiments of the present invention is implemented. When the program code for implementing the function of the base station is decoded and executed by the control and operation unit, the function of the base station in the wireless communication method in the embodiments of the present invention is implemented. With reference to the schematic structural diagram, the terminal, a processor in the terminal and the base station may respectively store the program code for implementing the function of the terminal and the program code for implementing the function of the base station. Then, the terminal and the base station may cooperate with each other to implement the wireless communication method in the embodiments of the present invention.

FIG. 5 is a schematic structural diagram of a wireless communications apparatus according to an embodiment of the present invention. As shown in FIG. 5, the wireless communications apparatus 50 includes a processor 501 and a memory 502 connected to the processor. The memory 502 stores program code. The program code may be classified into two types, which are respectively used to implement a function of the terminal and a function of the base station in the wireless communication method in the embodiments of the present invention. The two types of program code are denoted as program code for implementing the function of the terminal and program code for implementing the function of the base station. In this embodiment of the present invention, with reference to the schematic structural diagram, the terminal and the base station may respectively store the program code for implementing the function of the terminal and the program code for implementing the function of the base station. Then, the terminal and the base station may cooperate with each other to implement the wireless communication method in the embodiments of the present invention.

During specific implementation, the wireless communications apparatus 50 may further include a connection cable 500, a transmitter circuit 503, a receiver circuit 504, an antenna 505, an input/output (English: input/output, I/O) interface 506, and the like.

The transmitter circuit and the receiver circuit may be coupled to the antenna, and are connected to another communications device in a wireless manner. The transmitter circuit and the receiver circuit may alternatively be integrated into a transceiver, and the antenna may be a radio frequency antenna supporting a plurality of frequencies. The I/O interface allows the wireless communications apparatus 50 to interact with another communications device or a user. For example, for a base station, the I/O interface may be a common public radio interface (English: common public radio interface, CPRI) interface, an Ethernet interface, a USB interface, or the like. For a terminal, the I/O interface may be a screen, a keyboard, a microphone, a speaker, a USB interface, or the like. Components inside the wireless communications apparatus 50 may be coupled together by using various connection cables (for example, a bus system). In addition to a data bus, the bus system may further include a power bus, a control bus, a status signal bus, and the like. However, for clear description, various types of buses in this specification are marked as the bus system.

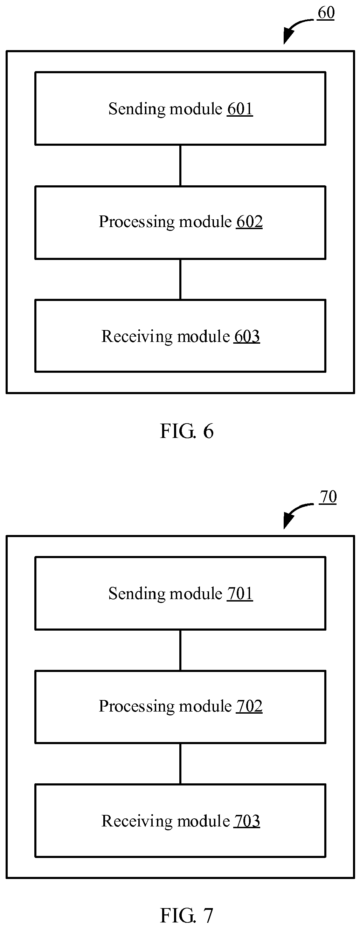

FIG. 6 is a schematic structural diagram of a base station according to an embodiment of the present invention. As shown in FIG. 6, the base station 60 includes a sending module 601, a processing module 602, and a receiving module 603.

The sending module 601 is configured to send a system message on a downlink carrier, where the system message includes uplink carrier configuration information and preamble transmission configuration information, the uplink carrier configuration information is used to indicate a plurality of uplink carriers, and the preamble transmission configuration information is used to indicate a transmission configuration of a radio access preamble.

The processing module 602 and the receiving module 603 are configured to detect radio access preambles on the plurality of uplink carriers.

The processing module 602 is further configured to: determine an uplink carrier in uplink carriers on which a same radio access preamble is detected, and set a radio access response message based on identification information of the determined uplink carrier.

The sending module 601 is further configured to send the radio access response message on a downlink carrier.

The sending module 601 may be a transmitter, the processing module 602 may be a processor, and the receiving module 603 may be a receiver. It should be understood that the base station 60 may be configured to implement steps performed by the terminal in the wireless communication method in the embodiments of the present invention. For related features, refer to the descriptions above. Details are not described herein again.

FIG. 7 is a schematic structural diagram of a terminal according to an embodiment of the present invention. As shown in FIG. 7, the terminal 70 includes a sending module 701, a processing module 702, and a receiving module 703.

The receiving module 703 is configured to receive a system message on a downlink carrier, where the system message includes uplink carrier configuration information and preamble transmission configuration information, the uplink carrier configuration information is used to indicate a plurality of uplink carriers, and the preamble transmission configuration information is used to indicate a transmission configuration of a radio access preamble.

The sending module 701 is configured to send the radio access preamble on an uplink carrier.

The processing module 702 and the receiving module 703 are further configured to: detect a radio access response message on the downlink carrier, and determine, based on the radio access response message, an uplink carrier indicated by a network.

The sending module 701 may be a transmitter, the processing module 702 may be a processor, and the receiving module 703 may be a receiver. It should be understood that the terminal 70 may be configured to implement steps performed by the terminal in the wireless communication method in the embodiments of the present invention. For related features, refer to the descriptions above. Details are not described herein again.

In this application, a processor is a device or circuit with a computing and processing capability, and may be referred to as a chip or a central processing unit (English: central processing unit, CPU). The foregoing processor may be a general purpose processor, a digital signal processor (DSP), an application-specific integrated circuit (ASIC), a field programmable gate array (FPGA) or another programmable logic device, a transistor logic device, a discrete hardware component, a general purpose processor, or a microprocessor. The processor may be integrated into a system on chip (system on chip, SOC).

A memory is a device or circuit with a data or information storage capability, and may provide an instruction and data for a processor. The memory includes a read-only memory (ROM, Read-Only Memory), a random access memory (RAM, Random Access Memory), a non-volatile random access memory (NVRAM), a programmable read-only memory, an electrically erasable programmable memory, a register, or the like.

It should be understood that the foregoing descriptions are specific implementations of the present invention, but are not intended to limit the protection scope of the present invention. In the foregoing schematic structural diagrams, only one logical function division is shown. During specific implementation, there may be other physical division manners. For example, a plurality of logic modules are represented as one physical module, or one logic module is split into a plurality of physical modules. Any equivalent modification or replacement readily figured out by a person of ordinary skill in the art shall fall within the technical scope disclosed in the present invention.

## Claims

1. A wireless communication method, wherein the method is performed by a terminal, and comprises:
receiving (S1) a system message on a downlink carrier, wherein the system message comprises uplink carrier configuration information and preamble transmission configuration information, the uplink carrier configuration information indicates a plurality of uplink carriers, and the preamble transmission configuration information indicates a transmission configuration of a radio access preamble;
wherein the system message further comprises a threshold, and the method further comprises:
selecting, based on the threshold, an uplink carrier from the plurality of the uplink carriers;
sending (S2), based on the transmission configuration of the radio access preamble, the radio access preamble on the uplink carrier of the plurality of the uplink carriers; and
descrambling(S3), based on identification information of a to be indicated uplink carrier among the plurality of uplink carriers, control information of a radio access response message on the downlink carrier; wherein the control information of the radio access response message is scrambled by a scrambling sequence and the scrambling sequence is calculated based on the identification information of the to be indicated uplink carrier.

2. The method according to claim 1, wherein the method further comprises:
determining an uplink carrier indicated by a network is the uplink carrier identified by the identification information of the to be indicated uplink carrier.

3. The method according to claim 2, further comprising:
sending(S4) a wireless connection setup request message on the uplink carrier indicated by the network, wherein the wireless connection setup request message requests to set up a wireless connection to the network.

4. The method according to claim 3, further comprising:
receiving (S5) a wireless connection setup complete message on the downlink carrier, wherein the wireless connection setup complete message indicates configuration information of the wireless connection between the terminal and the network.

5. A wireless communication method, wherein the method is performed by a base station, and comprises:
sending (S1) a system message on a downlink carrier, wherein the system message comprises uplink carrier configuration information and preamble transmission configuration information, the uplink carrier configuration information indicates a plurality of uplink carriers, and the preamble transmission configuration information indicates a transmission configuration of a radio access preamble;
detecting (S2) the radio access preamble on an uplink carrier of the plurality of uplink carriers;
wherein the system message further comprises a threshold for a terminal to selecting the uplink carrier;
scrambling control information of a radio access response message by using identification information of a to be indicated uplink carrier, wherein the control information indicates a transmission configuration of the radio access response message; and
sending (S3) the radio access response message on a downlink carrier.

6. The method according to claim 5, wherein the control information of the radio access response message is scrambled by a scrambling sequence and the scrambling sequence is calculated based on the identification information of the to be indicated uplink carrier.

7. The method according to claim 5 or 6, further comprising:
receiving (S4) a wireless connection setup request message on the to be indicated uplink carrier, wherein the wireless connection setup request message requests to set up a wireless connection.

8. The method according to claim 7, further comprising:
sending (S5) a wireless connection setup complete message on the downlink carrier, wherein the wireless connection setup complete message indicates configuration information of the wireless connection between the terminal and a network.

9. An apparatus, which is configured to perform the method according to any one of claims 1-4.

10. An apparatus, which is configured to perform the method according to any one of claims 5-8.

11. A computer-readable storage medium, wherein
the computer-readable storage medium stores program code, and when the program code is executed by a processor, the method according to any one of claims 1 to 4 is implemented.

12. A computer-readable storage medium, wherein
the computer-readable storage medium stores program code, and when the program code is executed by a processor, the method according to any one of claims 5 to 8 is implemented.

## Patentansprüche

1. Drahtloskommunikationsverfahren, wobei das Verfahren durch ein Endgerät durchgeführt wird und Folgendes umfasst:
Empfangen (S1) einer Systemnachricht auf einem Downlinkträger, wobei die Systemnachricht Uplinkträgerkonfigurationsinformationen und Präambelübertragungskonfigurationsinformationen umfasst, die Uplinkträgerkonfigurationsinformationen mehrere Uplinkträger angeben und die Präambelübertragungskonfigurationsinformationen eine Übertragungskonfiguration einer Funkzugangspräambel angeben;
wobei die Systemnachricht ferner eine Schwelle umfasst und das Verfahren ferner Folgendes umfasst:
Auswählen, basierend auf der Schwelle, eines Uplinkträgers aus den mehreren Uplinkträgern;
Senden (S2), basierend auf der Übertragungskonfiguration der Funkzugangspräambel, der Funkzugangspräambel auf dem Uplinkträger der mehreren Uplinkträger; und
Entwürfeln (S3), basierend auf Identifikationsinformationen eines anzugebenden Uplinkträgers unter den mehreren Uplinkträgern, von Steuerinformationen einer Funkzugangsantwortnachricht auf dem Downlinkträger; wobei die Steuerinformationen der Funkzugangsantwortnachricht durch eine Verwürfelungsfolge verwürfelt sind und die Verwürfelungsfolge basierend auf den Identifikationsinformationen des anzugebenden Uplinkträgers kalkuliert wird.

2. Verfahren nach Anspruch 1, wobei das Verfahren ferner Folgendes umfasst:
Bestimmen, dass ein durch ein Netz angegebener Uplinkträger der durch die Identifikationsinformationen des anzugebenden Uplinkträgers identifizierte Uplinkträger ist.

3. Verfahren nach Anspruch 2, das ferner Folgendes umfasst:
Senden (S4) einer Drahtlosverbindungseinrichtungsanforderungsnachricht auf dem durch das Netz angegebenen Uplinkträger, wobei die Drahtlosverbindungseinrichtungsanforderungsnachricht eine Einrichtung einer Drahtlosverbindung mit dem Netz anfordert.

4. Verfahren nach Anspruch 3, das ferner Folgendes umfasst:
Empfangen (S5) einer Drahtlosverbindungseinrichtungsabschlussnachricht auf dem Downlinkträger, wobei die Drahtlosverbindungseinrichtungsabschlussnachricht Konfigurationsinformationen der Drahtlosverbindung zwischen dem Endgerät und dem Netz angibt.

5. Drahtloskommunikationsverfahren, wobei das Verfahren durch eine Basisstation durchgeführt wird und Folgendes umfasst:
Senden (S1) einer Systemnachricht auf einem Downlinkträger, wobei die Systemnachricht Uplinkträgerkonfigurationsinformationen und Präambelübertragungskonfigurationsinformationen umfasst, die Uplinkträgerkonfigurationsinformationen mehrere Uplinkträger angeben und die Präambelübertragungskonfigurationsinformationen eine Übertragungskonfiguration einer Funkzugangspräambel angeben;
Detektieren (S2) der Funkzugangspräambel auf einem Uplinkträger der mehreren Uplinkträger;
wobei die Systemnachricht ferner eine Schwelle für ein Endgerät zum Auswählen des Uplinkträgers umfasst:
Verwürfeln von Steuerinformationen einer Funkzugangsantwortnachricht unter Verwendung von Identifikationsinformationen eines anzugebenden Uplinkträgers, wobei die Steuerinformationen eine Übertragungskonfiguration der Funkzugangsantwortnachricht angeben; und
Senden (S3) der Funkzugangsantwortnachricht auf einem Downlinkträger.

6. Verfahren nach Anspruch 5, wobei die Steuerinformationen der Funkzugangsantwortnachricht durch eine Verwürfelungsfolge verwürfelt sind und die Verwürfelungsfolge basierend auf den Identifikationsinformationen des anzugebenden Uplinkträgers kalkuliert wird.

7. Verfahren nach Anspruch 5 oder 6, das ferner Folgendes umfasst:
Empfangen (S4) einer Drahtlosverbindungseinrichtungsanforderungsnachricht auf dem anzugebenden Uplinkträger, wobei die Drahtlosverbindungseinrichtungsanforderungsnachricht eine Einrichtung einer Drahtlosverbindung anfordert.

8. Verfahren nach Anspruch 7, das ferner Folgendes umfasst:
Senden (S5) einer Drahtlosverbindungseinrichtungsabschlussnachricht auf dem Downlinkträger, wobei die Drahtlosverbindungseinrichtungsabschlussnachricht Konfigurationsinformationen der Drahtlosverbindung zwischen dem Endgerät und einem Netz angibt.

9. Einrichtung, die zum Durchführen des Verfahrens nach einem der Ansprüche 1-4 ausgelegt ist.

10. Einrichtung, die zum Durchführen des Verfahrens nach einem der Ansprüche 5-8 ausgelegt ist.

11. Computerlesbares Speichermedium, wobei
das computerlesbare Speichermedium einen Programmcode speichert und bei Ausführung des Programmcodes durch einen Prozessor das Verfahren nach einem der Ansprüche 1 bis 4 implementiert wird.

12. Computerlesbares Speichermedium, wobei
das computerlesbare Speichermedium einen Programmcode speichert und bei Ausführung des Programmcodes durch einen Prozessor das Verfahren nach einem der Ansprüche 5 bis 8 implementiert wird.

## Revendications

1. Procédé de communication sans fil, dans lequel le procédé est exécuté par un terminal, et comprend de :
recevoir (S1) un message système sur une porteuse de liaison descendante, dans lequel le message système comprend des informations de configuration de porteuse de liaison montante et des informations de configuration de transmission de préambule, les informations de configuration de porteuse de liaison montante indiquent une pluralité de porteuses de liaison montante, et les informations de configuration de transmission de préambule indiquent une configuration de transmission d'un préambule d'accès radio ;
dans lequel le message système comprend en outre un seuil, et le procédé comprend en outre de :
sélectionner, sur la base du seuil, une porteuse de liaison montante parmi la pluralité de porteuses de liaison montante ;
envoyer (S2), sur la base de la configuration de transmission du préambule d'accès radio, le préambule d'accès radio sur la porteuse de liaison montante de la pluralité de porteuses de liaison montante ; et
désembrouiller (S3), sur la base d'informations d'identification d'une porteuse de liaison montante à indiquer parmi la pluralité de porteuses de liaison montante, des informations de commande d'un message de réponse d'accès radio sur la porteuse de liaison descendante ; dans lequel les informations de commande du message de réponse d'accès radio sont embrouillées par une séquence d'embrouillage et la séquence d'embrouillage est calculée sur la base des informations d'identification de la porteuse de liaison montante à indiquer.

2. Procédé selon la revendication 1, dans lequel le procédé comprend en outre de :
déterminer qu'une porteuse de liaison montante indiquée par un réseau est la porteuse de liaison montante identifiée par les informations d'identification de la porteuse de liaison montante à indiquer.

3. Procédé selon la revendication 2, comprenant en outre de :
envoyer (S4) un message de demande d'établissement de connexion sans fil sur la porteuse de liaison montante indiquée par le réseau, dans lequel le message de demande d'établissement de connexion sans fil demande d'établir une connexion sans fil au réseau.

4. Procédé selon la revendication 3, comprenant en outre de :
recevoir (S5) un message de fin d'établissement de connexion sans fil sur la porteuse de liaison descendante, dans lequel le message de fin d'établissement de connexion sans fil indique des informations de configuration de la connexion sans fil entre le terminal et le réseau.

5. Procédé de communication sans fil, dans lequel le procédé est exécuté par une station de base, et comprend de :
envoyer (S1) un message système sur une porteuse de liaison descendante, dans lequel le message système comprend des informations de configuration de porteuse de liaison montante et des informations de configuration de transmission de préambule, les informations de configuration de porteuse de liaison montante indiquent une pluralité de porteuses de liaison montante, et les informations de configuration de transmission de préambule indiquent une configuration de transmission d'un préambule d'accès radio ;
détecter (S2) le préambule d'accès radio sur une porteuse de liaison montante de la pluralité de porteuses de liaison montante ;
dans lequel le message système comprend en outre un seuil pour qu'un terminal sélectionne la porteuse de liaison montante ;
embrouiller des informations de commande d'un message de réponse d'accès radio en utilisant des informations d'identification d'une porteuse de liaison montante à indiquer, dans lequel les informations de commande indiquent une configuration de transmission du message de réponse d'accès radio ; et
envoyer (S3) le message de réponse d'accès radio sur une porteuse de liaison descendante.

6. Procédé selon la revendication 5, dans lequel les informations de commande du message de réponse d'accès radio sont embrouillées par une séquence d'embrouillage et la séquence d'embrouillage est calculée sur la base des informations d'identification de la porteuse de liaison montante à indiquer.

7. Procédé selon la revendication 5 ou 6, comprenant en outre de :
recevoir (S4) un message de demande d'établissement de connexion sans fil sur la porteuse de liaison montante à indiquer, dans lequel le message de demande d'établissement de connexion sans fil demande d'établir une connexion sans fil.

8. Procédé selon la revendication 7, comprenant en outre de :
envoyer (S5) un message de fin d'établissement de connexion sans fil sur la porteuse de liaison descendante, dans lequel le message de fin d'établissement de connexion sans fil indique des informations de configuration de la connexion sans fil entre le terminal et un réseau.

9. Appareil, qui est configuré pour exécuter le procédé selon l'une quelconque des revendications 1 à 4.

10. Appareil, qui est configuré pour exécuter le procédé selon l'une quelconque des revendications 5 à 8.

11. Support de stockage lisible par ordinateur, dans lequel
le support de stockage lisible par ordinateur stocke un code de programme, et lorsque le code de programme est exécuté par un processeur, le procédé selon l'une quelconque des revendications 1 à 4 est mis en oeuvre.

12. Support de stockage lisible par ordinateur, dans lequel
le support de stockage lisible par ordinateur stocke un code de programme, et lorsque le code de programme est exécuté par un processeur, le procédé selon l'une quelconque des revendications 5 à 8 est mis en oeuvre.
